# EUROPÄISCHE PATENTSCHRIFT

(11) **EP 1 976 663 B1**
(45) Veröffentlichungstag und Bekanntmachung des Hinweises auf die Patenterteilung: **12.03.2014**
(21) Anmeldenummer: 07704122.6
(22) Anmeldetag: 24.01.2007
(51) Int. Cl.: B23K 35/363

(54) **BORSÄUREFREIES FLUSSMITTEL FÜR DAS HARTLÖTEN METALLISCHER WERKSTOFFE**
BORIC ACID-FREE FLUX FOR BRAZING METAL MATERIALS
FLUX SANS ACIDE BORIQUE POUR BRASAGE FORT DE MATÉRIAUX MÉTALLIQUES

(30) Priorität: 26.01.2006 DE 102006003921
(43) Veröffentlichungstag der Anmeldung: 08.10.2008
(73) Patentinhaber: MEC Holding GmbH, 65812 Bad Soden (DE)
(72) Erfinder: GOMES, Dominique, F-91160 Saulx les Chartreux (FR)
(74) Vertreter: Staudt, Armin Walter
(86) Internationale Anmeldenummer: PCT/EP2007/050691
(87) Internationale Veröffentlichungsnummer: WO 2007/085616

(56) Entgegenhaltungen:
- EP-A2- 1 052 053
- DE-A1- 2 444 521
- GB-A- 782 307

## Beschreibung

Die vorliegende Erfindung betrifft ein borsäurefreies Flussmittel auf Basis anorganischer Borverbindungen für das Hartlöten metallischer Werkstoffe in Verbindung mit Silber-, Kupfer- oder Nickelbasisloten.

Löten ist ein Verfahren zum stoffschlüssigen Fügen metallischer Werkstoffe mit Hilfe eines geschmolzenen Zusatzmetalls, das als Lot bezeichnet wird. Die Schmelztemperatur des Lot-Werkstoffes liegt unterhalb der Schmelztemperatur des Werkstoffes der zu verbindenden Werkstücke. Unter Voraussetzung metallischer feiner Oberflächen benetzt das flüssige Lot den Grundwerkstoff. Oxidschichten, wie sie auf jeder technischen Metalloberfläche vorhanden sind, müssen daher zunächst entfernt werden, was beim Löten an Luft durch Abdecken der Lötstelle mit Flussmitteln gelingt. Im Schmelzfluss des Flussmittels werden vorhandene Oxide bei der Löttemperatur zersetzt oder sie gehen in Lösung.

Das Flussmittel hat somit in erster Linie die Aufgabe, vorhandene Oxide auf den Lot- und Oberflächen zu entfernen und deren Bildung während des Lötprozesses zu verhindern, so dass das Lot das Grundmaterial ausreichend benetzen kann.

Zum Hartlöten werden Legierungen auf Silber-, Kupfer (auch Messing oder Bronze)- oder Nickelbasis eingesetzt oder reine Metalle. Die Schmelztemperatur des Flussmittels muss an die Arbeitstemperatur des Hartlotes angepasst sein. In der Regel schmilzt das Flussmittel ca. 50 bis 100° C unterhalb der Arbeitstemperatur des Hartlotes auf. Das geschmolzene Flussmittel soll auf dem Werkstück einen dichten, gleichmäßigen Überzug bilden, der beim Löten für die Dauer der Lötzeit erhalten bleibt. Bei Liquidustemperaturen von mehr als 450° C spricht man von Hartloten.

Bei den Flussmitteln handelt es sich in der Regel um nichtmetallische Verbindungen, wie Säuren, Salze oder Harze. Wegen der häufig ätzenden Wirkungen der Flussmittel besteht die Gefahr, dass Flussmittelreste auf der Lötstelle korrossionsfördernd wirken. Idealerweise sind daher Flussmittel bei Raumtemperatur pH-neutral und entfalten ihre ätzende Wirkung erst bei der Löttemperatur.

Hartlot-Flussmittel bestehen in der Regel aus Salzgemischen, die in der Lage sind, Metalloxide zu lösen. Hierbei handelt es sich im Wesentlichen um anorganische Borverbindungen, insbesondere um Alkaliborate und Fluorborate oder Halogenide, insbesondere um Alkalifluoride.

Aus der DE 28 02 187 C2 ist beispielsweise eine Flussmittelmischung bestehend aus 60 % Kaliumpentaborat, 35 % Kaliumtetrafluorborat und 5 % Kaliumhydrogenfluorid bekannt, welche mit 2 % Ethylen- Propylen-Mischpolimerisat angeteigt und zu einem Flussmittelformteil verarbeitet wird. In der Regel liegen die Flussmittel aber als Pulver, Suspensionen oder in Pastenform vor.

Die DE 24 44 521 A1 offenbart ein Flussmittel zum Hartlöten, das aus Borsäure und verschiedenen Alkalimetallpolyboraten besteht. Zusätzlich kann das Flussmittel 1 Gew.-% Bor in elementarer Form enthalten. Borsäure wirkt sich auf das menschliche Hormonsystem aus und gilt daher als extrem gesundheitsschädlich.

Aus der GB 909 314 A ist ein Hartlötflussmittel zum Löten von Nickel und Nickellegierungen bekannt, das zusätzlich zu Bestandteilen wie Kaliumtetrafluorborat, Kaliummetaborat und Kaliumfluorid auch Kupferverbindungen wie Kupferoxid oder Kupferchlorid enthält, wobei die letztgenannten Bestandteile die Reaktion des Flussmittels mit dem Grundwerkstoff unterbinden sollen, um eine Versprödung zu vermeiden

Aus der GB 782,307 A ist eine Silberlotlegierung und ein dafür geeignetes Flussmittel bekannt, wobei das Flussmittel Kalium-Pentaborat, KaliumTetraborat, Kaliumbifluorid und Kaliumfluorborat enthält. Dieses Flussmittel hat einen Schmelzpunkt von 1100° F, wohingegen das Silberlot mit einer Schmelztemperatur von 1200° F angegeben wird.

Die EP 1 052 053 A2 beschreibt ein Flussmittel auf Basis anorganischer Bor- und/oder Halogenverbindungen für das Hartlöten von Werkstoffoffen mit Silber- oder Kupferbasislote, wobei das Flussmittel einen aktivierenden Zusatz, der aus elementarem Bor sowie Mo, W, Mn, Co, Ni, Pd, Cu und/oder Ag besteht. Die bevorzugten Flussmittel enthalten überwiegend Kaliumtetraborat oder Borsäure.

Aufgrund seiner Giftigkeit enthalten Flussmittel vorzugsweise keine Borsäure. Die Industrienorm DIN EN 1045 (Ausgabe 1997) teilt die Flussmittel zum Hartlöten von Schwermetallen nach ihrer Zusammensetzung und Wirktemperatur in sieben Typen ein, wovon sechs dieser Typen Borverbindungen enthalten und ein Typ borfrei ist, jedoch Choride und Fluoride enthält.

Bei Einsatz einiger der bekannten Flussmittel bilden sich korrosive Rückstände, die nach dem Löten aufwändig entfernt werden müssen.

Der vorliegenden Erfindung liegt die Aufgabe zugrunde, ein weiteres Flussmittel zum Hartlöten bereit zu stellen, das frei von Borsäure ist, und das zu einer guten Benetzung der zu verbindenden Werkstücke beiträgt und das sich durch Rückstände mit geringer Korrosivität auszeichnet.

Diese Aufgabe wird ausgehend von dem eingangs genannten Hartlötflussmittel erfindungsgemäß dadurch gelöst, dass die Borverbindungen - abgesehen von einem Flüssigkeitsanteil - mindestens 90 Gew.-% des Flussmittels ausmachen und Kaliumpentaborat und Kaliummetaborat umfassen, wobei das Verhältnis der Gewichtsanteile von Kaliumpentaborat und Kaliummetaborat im Bereich zwischen 4 und 10 liegt.

Kaliumpentaborat (KB₅O₈ oder KB₅O₈· 5H₂O) ist eine gängige Flussmittel-Komponente. Dies gilt jedoch nicht für Kaliummetaborat (KBO₂).

Es hat sich überraschend gezeigt, dass aus den beiden Komponenten ein Vielzweckflussmittel erhalten werden kann, das ein gutes Benetzungsverhalten des Lotes auf dem zu lötenden Werkstoff bewirkt. Dies macht sich vorallem bei ansonsten schwer zu benetzenden metallischen Werkstoffen und Hartmetallen bemerkbar. Voraussetzung hierfür ist, dass das Verhältnis der Gewichtsanteile von Kaliumpentaborat und Kaliummetaborat im Bereich zwischen 4 und 10 liegt.

Das erfindungsgemäße Hartlöt-Flussmittel basiert zu mindestens 90 Gew.-% auf den beiden genannten Komponenten Kaliumpentaborat und Kaliummetaborat, wobei Zusätze an anderen Substanzen nicht ausgeschlossen sind, solange sich dadurch die oben genannten vorteilhaften Eigenschaften der beiden genannten Borverbindungen mit dem angegebenen Mengenverhältnis nicht wesentlich verschlechtern.

Weitere Vorteile des erfindungsgemäßen Flussmittels bestehen darin, dass es sich bei den beiden genannten Borverbindungen um vergleichsweise wenig giftige Substanzen handelt und dass es Rückstände mit vergleichsweise geringer Korrosivität bildet.

Hinsichtlich der Benetzungseigenschaften hat es sich als besonders günstig erwiesen, wenn das Verhältnis der Gewichtsanteile von Kaliumpentaborat und Kaliummetaborat im Bereich zwischen 5 und 8, vorzugsweise im Bereich zwischen 6,5 und 7 liegt.

Im Hinblick auf eine gute Benetzung des zu lötenden Werkstoffes und einen möglichst wenig korrosiven Rückstand des Flussmittels besteht das erfindungsgemäße Flussmittel - abgesehen von einem etwaigen Flüssigkeitsanteil - im Idealfall vollständig aus Borverbindungen. In der Praxis haben sich Flussmittel bewährt, bei denen die Borverbindungen - abgesehen von einem Flüssigkeitsanteil - mindestens 90 Gew.-%, vorzugsweise mindestens 95Gew.-% des Flussmittels ausmachen.

Das erfindungsgemäße Hartlöt-Flussmittel basiert im Wesentlichen auf den beiden genannten Komponenten Kaliumpentaborat und Kaliummetaborat, wobei Zusätze an anderen Substanzen nicht ausgeschlossen sind, solange sich dadurch die oben genannten vorteilhaften Eigenschaften der beiden genannten Borverbindungen mit dem angegebenen Mengenverhältnis nicht wesentlich verschlechtern. Als ergänzende Borverbindungen kommen vornehmlich weitere Borate von Kalium und Erdalkalimetallen in Frage, außerdem die üblichen Halogenverbindungen, wie Fluoride und Chloride von Alkali- und Erdalkalimetallen.

In dem Zusammenhang hat es sich jedoch bewährt, wenn die beiden Komponenten Kaliumpentaborat und Kaliummetaborat mindestens 95 Gew.-% der Borverbindungen ausmachen.

Besonders bevorzugt ist eine Ausführungsform des erfindungsgemäßen Flussmittels, bei der die Borverbindungen ausschließlich in Form von Kaliumpentaborat und Kaliummetaborat vorliegen. Dadurch ergeben sich besonders wenig korrosive Rückstände.

In dem Zusammenhang hat es sich als besonders vorteilhaft erwiesen, wenn der Gewichtsanteil an Kaliumpentaborat - bezogen auf den gesamten Anteil an den Borverbindungen - zwischen 75% und 94% beträgt.

Demgemäß liegt der Gewichtsanteil an Kaliummetaborat - bezogen auf den gesamten Anteil an den Borverbindungen -vorzugsweise zwischen 6% und 25%.

Insbesondere wegen der angestrebten geringen Giftigkeit des erfindungsgemäßen Flussmittels enthält dieses vorzugsweise kein Borax (NaB₄O₅(OH)₄ · H₂O).

In dem Zusammenhang und auch zwecks einer geringen Korrosivität des Rückstandes hat sich auch eine Ausführungsform des erfindungsgemäßen Flussmittels als vorteilhaft erwiesen, das keine Fluorverbindungen und/oder auch keine Chlorverbindungen enthält.

Das erfindungsgemäße Flussmittel liegt als Formteil, Pulver, Suspension oder Paste vor, und es kann auch mit dem Lot-Werkstoff kombiniert werden - zum Beispiel als Pulvermischung. Bei einem Flussmittel in Pastenform liegt der Flüssigkeitsanteil zwischen 15 und 30 Gew.-%, vorzugsweise zwischen 20 und 26 Gew.-%.

Der Flüssigkeitsanteil - dabei handelt es sich in der Regel um Wasser, aliphatische Alkohole, Glykole und dergleichen - wird je nach gewünschter Viskosität des Flussmittels eingestellt.

Nachfolgend wird die Erfindung anhand eines Ausführungsbeispiels näher erläutert.

### Beispiel 1

Es wird ein Flussmittel zum Hartlöten in Verbindung mit einem Lot-Werkstoff aus 40 Cu, 25 Ag, 32 Zn und 2 Sn eingesetzt (Konzentrationsangaben in Gewichtsanteilen) mit folgender Zusammensetzung hergestellt:
65,0 Gew.-% Kaliumpentaborat
10,5 Gew.-% Kaliummetaborat
24,5 Gew.-% Wasser

Die Bestandteile Kaliumpentaborat und Kaliummetaborat werden in Pulverform eingesetzt, eingewogen und zusammen mit Wasser einer kontinuierlich . arbeiteten Mühle zugeführt und darin fein gemahlen und homogenisiert. Dieser Mahl- und Homogenisierungsvorgang wird dreimal wiederholt, so dass eine homogene Paste erhalten wird, die sich durch den oben genannten Wassergehalt und durch eine typische Korngröße des eingesetzten Flussmittel-Pulvers von weniger als 100 µm auszeichnet.

Das Gewichtsverhältnis der beiden Komponenten Kaliumpentaborat und Kalium metaborat beträgt 6,19. Das Flussmittel ist frei von Borax, Borsäure, Chloriden und Fluoriden und wird zum Verbinden von Bauteilen aus Messing durch Hartlöten eingesetzt, wobei es sich in Verbindung mit dem oben genannten Hartlot-Werkstoff durch eine gute Benetzung der zu verbindenden Bauteile und durch eine geringe Korrosivität auszeichnet.

### Beispiel 2

Es wird ein Flussmittel zum Hartlöten in Verbindung mit einem Messing-Hartlot aus 58 Cu, 1 Ag, Rest Zn (Konzentrationsangaben in Gewichtsanteilen) mit folgender Zusammensetzung hergestellt:
69,0 Gew.-% Kaliumpentaborat
9,5 Gew.-% Kaliummetaborat
21,5 Gew.-% Wasser

Die Bestandteile Kaliumpentaborat und Kaliummetaborat werden in Pulverform eingesetzt, eingewogen und zusammen mit Wasser einer kontinuierlich arbeiteten Mühle zugeführt und darin fein gemahlen und homogenisiert wie oben anhand Beispiel 1 beschrieben.

Es wird eine homogene Paste erhalten, die sich durch den oben genannten Wassergehalt und durch eine typische Korngröße des eingesetzten Flussmittel-Pulvers von weniger als 100 µm auszeichnet.

Das Gewichtsverhältnis der beiden Komponenten Kaliumpentaborat und Kaliummetaborat beträgt 7,26. Das Flussmittel ist frei von Borax, Borsäure, Chloriden und Fluoriden und wird zum Verbinden von Bauteilen aus Stahl durch Hartlöten eingesetzt, wobei es sich in Verbindung mit dem Lot-Werkstoff aus dem oben genannten Lot-Werkstoff durch eine gute Benetzung der zu verbindenden Bauteile und durch eine geringe Korrosivität auszeichnet.

### Beispiel 3

Es wird ein Flussmittel zum Hartlöten in Verbindung mit einem Lot-Werkstoff aus 60 Cu und 40 Zn (Konzentrationsangaben in Gewichtsanteilen) mit folgender Zusammensetzung hergestellt:
67,0 Gew.-% Kaliumpentaborat
10,0 Gew.-% Kaliummetaborat
23,0 Gew.-% Wasser

Die Bestandteile Kaliumpentaborat und Kaliummetaborat werden in Pulverform eingesetzt, eingewogen und zusammen mit Wasser einer kontinuierlich arbeiteten Mühle zugeführt und darin fein gemahlen und homogenisiert wie oben anhand Beispiel 1 beschrieben.

Es wird eine homogene Paste erhalten, die sich durch den oben genannten Wassergehalt und durch eine typische Korngröße des eingesetzten Flussmittel-Pulvers von weniger als 100 µm auszeichnet.

Das Gewichtsverhältnis der beiden Komponenten Kaliumpentaborat und Kaliummetaborat beträgt 6,7. Das Flussmittel ist frei von Borax, Borsäure, Chloriden und Fluoriden und wird zum Verbinden von Bauteilen aus Stahl durch Hartlöten eingesetzt, wobei es sich in Verbindung mit dem obigen Lot-Werkstoff durch eine gute Benetzung des Werkstoffs der zu verbindenden Bauteile und durch eine geringe Korrosivität auszeichnet.

## Patentansprüche

1. Borsäurefreies Flussmittel auf Basis anorganischer Borverbindungen für das Hartlöten metallischer Werkstoffe in Verbindung mit Silber-, Kupfer- oder Nickelbasisloten, **dadurch gekennzeichnet, dass** die Borverbindungen - abgesehen von einem Flüssigkeitsanteil - mindestens 90 Gew.-% des Flussmittels ausmachen und Kaliumpentaborat und Kaliummetaborat umfassen, wobei das Verhältnis der Gewichtsanteile von Kaliumpentaborat und Kaliummetaborat im Bereich zwischen 4 und 10 liegt.

2. Flussmittel nach Anspruch 1, **dadurch gekennzeichnet, dass** das Verhältnis der Gewichtsanteile von Kaliumpentaborat und Kaliummetaborat im Bereich zwischen 5 und 8, vorzugsweise im Bereich zwischen 6,5 und 7 liegt.

3. Flussmittel nach einem der vorhergehenden Ansprüche, **dadurch gekennzeichnet, dass** die Borverbindungen - abgesehen von einem Flüssigkeitsanteil - mindestens
95 Gew.-% des Flussmittels ausmachen.

4. Flussmittel nach Anspruch 1 oder 2, **dadurch gekennzeichnet, dass** Kaliumpentaborat und Kaliummetaborat mindestens 90 Gew.-%, vorzugsweise mindestens 95 Gew.-% der Borverbindungen ausmachen.

5. Flussmittel nach einem der vorhergehenden Ansprüche, **dadurch gekennzeichnet, dass** die Borverbindungen ausschließlich in Form von Kaliumpentaborat und Kaliummetaborat vorliegen.

6. Flussmittel nach einem der Ansprüche 1 bis 4, **dadurch gekennzeichnet, dass** es kein Borax enthält.

7. Flussmittel nach einem der vorhergehenden Ansprüche, **dadurch gekennzeichnet, dass** es keine Fluorverbindungen enthält.

8. Flussmittel nach einem der vorhergehenden Ansprüche, **dadurch gekennzeichnet, dass** es keine Chlorverbindungen enthält.

9. Flussmittel nach einem der vorhergehenden Ansprüche, **dadurch gekennzeichnet, dass** der Gewichtsanteil an Kaliumpentaborat - bezogen auf den gesamten Anteil an den Borverbindungen - zwischen 75% und 94% beträgt.

10. Flussmittel nach einem der vorhergehenden Ansprüche, **dadurch gekennzeichnet, dass** der Gewichtsanteil an Kaliummetaborat - bezogen auf den gesamten Anteil an den Borverbindungen - zwischen 6% und 25% beträgt.

11. Flussmittel nach einem der vorhergehenden Ansprüche, **dadurch gekennzeichnet, dass** es in Pastenform vorliegend einen Flüssigkeitsanteil zwischen 15 und 30 Gew.-%, vorzugsweise zwischen 20 und 26 Gew.-% aufweist.

## Claims

1. A boric acid-free flux based on inorganic boron compounds for brazing metallic materials in combination with silver, copper or nickel base solders, **characterized in that** the boron compounds apart from a liquid portion - account for at least 90% by wt. of the flux and comprise potassium pentaborate and potassium metaborate, the ratio of the weight parts of potassium pentaborate and potassium metaborate being in the range between 4 and 10.

2. The flux according to claim 1, **characterized in that** the ratio of the weight parts of potassium pentaborate and potassium metaborate is in the range between 5 and 8, preferably in the range between 6.5 and 7.

3. The flux according to any one of the preceding claims, **characterized in that** the boron compounds, apart from a liquid part, account for at least 95% by wt. of the flux.

4. The flux according to claim 1 or 2, **characterized in that** potassium pentaborate and potassium metaborate account for at least 90% by wt., preferably at least 95% by wt., of the boron compounds.

5. The flux according to any one of the preceding claims, **characterized in that** the boron compounds are exclusively present in the form of potassium pentaborate and potassium metaborate.

6. The flux according to any one of claims 1 to 4, **characterized in that** it does not contain borax.

7. The flux according to any one of the preceding claims, **characterized in that** it does not contain fluorine compounds.

8. The flux according to any one of the preceding claims, **characterized in that** it does not contain chlorine compounds.

9. The flux according to any one of the preceding claims, **characterized in that** the weight part of potassium pentaborate, based on the total portion of the boron compounds, is between 75% and 94%.

10. The flux according to any one of the preceding claims, **characterized in that** the weight part of potassium metaborate, based on the total portion of the boron compounds, is between 6% and 25%.

11. The flux according to any one of the preceding claims, **characterized in that**, while being present in paste form, it has a liquid portion between 15% by wt. and 30% by wt., preferably between 20% by wt. and 26% by wt.

## Revendications

1. Fluide sans acide borique à base de composés inorganiques de bore pour le brasage de matériaux métalliques, en combinaison avec le brasage de l'argent, du cuivre ou de nickel, **caractérisé en ce que** les composés du bore représentent au moins 90 pourcents en poids du fluide à l'exception d'une portion de liquide, et comportent du pentaborate de potassium et du métaborate de potassium, le rapport des parts pondérales du pentaborate de potassium et du métaborate de potassium étant compris entre 4 et 10.

2. Fluide selon la revendication 1, **caractérisé en ce que** le rapport des proportions en poids entre le pentaborate de potassium et le métaborate de potassium est compris entre 5 et 8, de préférence entre 6,5 et 7.

3. Fluide selon l'une quelconque des revendications précédentes, **caractérisé en ce que** les composés de bore - à l'exception d'une portion de liquide - représentent au moins 90 pourcents en poids, de préférence au moins 95 pourcents en poids du fluide.

4. Fluide selon la revendication 1 ou 2, **caractérisé en ce que** le pentaborate de potassium et le métaborate représentent au moins 90 pourcents poids, de préférence au moins 95 pourcent en poids des composés de bore.

5. Fluide selon l'une quelconque des revendications précédentes, **caractérisé en ce que** les composés du bore sont présents exclusivement sous forme de pentaborate de potassium et de métaborate de potassium.

6. Fluide selon l'une quelconque des revendications 1 à 4, **caractérisé en ce qu'**il ne contient pas de borax.

7. Fluide selon l'une quelconque des revendications précédentes, **caractérisé en ce qu'**il ne contient pas de composés de fluor.

8. Fluide selon l'une quelconque des revendications précédentes, **caractérisé en ce qu'**il ne contient pas de composés chlorés.

9. Fluide selon l'une quelconque des revendications précédentes, **caractérisé en ce que** la proportion en poids de pentaborate de potassium - sur la base de la quantité totale des composés de bore - est comprise entre 75% et 94%.

10. Fluide selon l'une quelconque des revendications précédentes, **caractérisé en ce que** la proportion en poids de métaborate de potassium - sur la base de la quantité totale des composés de bore - est comprise entre 6% à 25%.

11. Fluide selon l'une quelconque des revendications précédentes, **caractérisé en ce qu'**il présente sous forme de pâte une portion de liquide comprise entre 15 et 30 pourcents en poids de préférence entre 20 et 26 pourcents en poids.
